(19) Europäisches Patentamt
European Patent Office
Office européen des brevets

(11) **EP 2 165 095 B1**

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **08761197.6**

(22) Anmeldetag: **19.06.2008**

(51) Int Cl.:
**F16H 61/02** (2006.01)

(86) Internationale Anmeldenummer:
**PCT/EP2008/057751**

(87) Internationale Veröffentlichungsnummer:
**WO 2009/007218 (15.01.2009 Gazette 2009/03)**

(54) **VERFAHREN ZUR STEUERUNG EINES AUTOMATISIERTEN STUFENSCHALTGETRIEBES**

METHOD FOR CONTROLLING AN AUTOMATIC MULTI-STEP REDUCTION GEAR

PROCÉDÉ POUR COMMANDER UNE BOITE DE VITESSES AUTOMATISÉE À RAPPORTS ÉTAGÉS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.07.2007 DE 102007031725**

(43) Veröffentlichungstag der Anmeldung:
**24.03.2010 Patentblatt 2010/12**

(73) Patentinhaber: **ZF Friedrichshafen AG 88038 Friedrichshafen (DE)**

(72) Erfinder:
• **WOLFGANG, Werner**
  **88213 Ravensburg (DE)**
• **WÜRTHNER, Maik**
  **88048 Friedrichshafen (DE)**
• **SAUTER, Ingo**
  **88074 Meckenbeuern**
  **(DE)**

(56) Entgegenhaltungen:
DE-A1- 19 839 838     DE-A1-102004 015 966
US-A- 4 854 194     US-A- 5 406 862

**Beschreibung**

Die Erfindung betrifft ein Verfahren zur Steuerung eines automatisierten Stufenschaltgetriebes eines Kraftfahrzeugs, das eingangsseitig über mindestens eine steuerbare Reibungskupplung mit einem als Verbrennungsmotor ausgebildeten Antriebsmotor und ausgangsseitig über einen Achsantrieb mit antreibbaren Rädern einer Antriebsachse in Verbindung steht, und das mehrere Anfahrgänge aufweist, wobei zu Beginn eines Anfahrvorgangs einer der Anfahrgänge in Abhängigkeit von der Fahrzeugmasse und der Fahrbahnsteigung als optimaler Anfahrgang ausgewählt sowie nachfolgend eingelegt wird.

Automatisierte Stufenschaltgetriebe, die mehrere Anfahrgänge aufweisen, kommen vorwiegend in Nutzfahrzeugen der mittleren und hohen Gewichtsklassen zur Anwendung. Es handelt sich dabei bevorzugt um automatisierte Schaltgetriebe mit einer einzigen über eine steuerbare Reibungskupplung mit dem Antriebsmotor verbindbaren Eingangswelle und um automatisierte Doppelkupplungsgetriebe mit zwei über jeweils eine steuerbare Reibungskupplung mit dem Antriebsmotor verbindbaren Eingangswellen. Beim Anfahren des Kraftfahrzeugs wird die dem ausgewählten Anfahrgang zugeordnete Reibungskupplung als Anfahrkupplung verwendet. Nach dem Einlegen des ausgewählten Anfahrgangs wird die zwischen dem Antriebsmotor und der betreffenden Eingangswelle zu Beginn große und mit zunehmender Fahrgeschwindigkeit abnehmende Drehzahldifferenz im Schlupfbetrieb der Anfahrkupplung überbrückt. Die Dauer des Schlupfbetriebs und die dadurch in die Reibungskupplung eingetragene Wärmemenge wird außer durch die Fahrzeugmasse, die Fahrbahnsteigung, die Drehzahl und das Drehmoment des Antriebsmotors wesentlich von der Übersetzung des Anfahrgangs und somit von der Auswahl des Anfahrgangs bestimmt.

Wird ein zu kleiner Gang mit einer zu hohen Übersetzung als Anfahrgang verwendet, so wird durch die hohe Zugkraft an den Rädern der Antriebsachse sehr schnell die Schaltdrehzahl des Antriebsmotors erreicht und demzufolge hochgeschaltet, was unter Umständen mehrfach und kurz nacheinander erfolgt. Diese Schaltvorgänge führen nachteilig zu komfortmindernden Zugkraftunterbrechungen bzw. Zugkrafteinbrüchen und zu unnötigem Ver-schleiß der Gang- und Reibungskupplungen sowie der zugeordneten Stellantriebe. Wird dagegen ein zu großer Gang mit einer zu niedrigen Übersetzung als Anfahrgang genutzt, so wird der Schlupfbetrieb der Reibungskupplung durch die niedrige Zugkraft an den Rädern der Antriebsachse und die hohe Drehzahldifferenz zwischen dem Antriebsmotor und der Eingangswelle wesentlich verlängert, was neben der Verzögerung des Anfahrvorgangs auch zu einer thermischen Überlastung und Schädigung der Reibungskupplung führen kann. Im Extremfall, wie z.B. beim Anfahren mit großer Beladung an einem steilen Berg, kann bei der Verwendung eines zu hohen Anfahrgangs die Zugkraft an den Rädern der Antriebsachse sogar kleiner als der in diesem Fall aus dem Steigungswiderstand und dem Rollwiderstand gebildete Fahrwiderstand sein, so dass das Kraftfahrzeug in gefährlicher Weise zurückrollt.

Während ein erfahrener Berufskraftfahrer sicherlich in der Lage ist, den für die aktuelle Anfahrsituation jeweils am besten geeigneten Anfahrgang auszuwählen, ist dies für einen unerfahrenen Fahrer schwer zu bewerkstelligen, da insbesondere die Fahrbahnsteigung und deren Einfluss auf den Anfahrvorgang schwierig abzuschätzen sind. Im Übrigen kann ein Fahrer beispielsweise im innerörtlichen Stop-and-Go-Verkehr durch die Auswahl des jeweils optimalen Anfahrgangs sicherheitsrelevant von der Beobachtung des Verkehrsgeschehens abgelenkt werden.

Zur Erhöhung der Verkehrssicherheit, zur Entlastung des Fahrers und zur Steigerung der Lebensdauer des Antriebsstrangs besteht daher ein Bedarf, die Auswahl des jeweils optimalen Anfahrgangs zu automatisieren. Aus diesem Grund sind bereits mehrere Verfahren zur automatisierten Ermittlung eines Anfahrgangs vorgeschlagen worden.

Ein erstes derartiges Verfahren zur Ermittlung eines Anfahrgangs ist aus der gattungsbildenden US 5,406,862 A bekannt. Gemäß diesem bekannten Verfahren ist vorgesehen, dass in einem dem Anfahren vorausgehenden Fahrzyklus die Fahrbahnneigung und die Fahrbeschleunigung z.B. mittels eines an dem Kraftfahrzeug montierten Neigungssensors und eines an der Ausgangswelle des Stufenschaltgetriebes angeordneten Drehzahlsensors sensorisch ermittelt werden, dass mit den ermittelten Werten der Fahrbahnneigung und der Fahrbeschleunigung die bei gleichem Drehmoment des Antriebsmotors erreichbare Fahrbeschleunigung in der Ebene berechnet wird, und dass mit dem Wert der Fahrbeschleunigung in der Ebene die Fahrzeugmasse berechnet wird. Des Weiteren ist vorgesehen, dass aus einem in einem Datenspeicher des Getriebesteuergerätes abgelegten fahrzeugspezifischen Kennfeld mit den Werten der Fahrbahnsteigung und der Fahrzeugmasse der für den bevorstehenden Anfahrvorgang optimale Anfahrgang bestimmt wird, wobei bedarfsweise interpoliert wird und bei nicht vorhandenem aktuellen Wert der Fahrzeugmasse der Wert der maximalen Fahrzeugmasse verwendet wird.

Ein weiteres derartiges Verfahren zur Ermittlung eines Anfahrgangs ist in der DE 198 39 837 A1 beschrieben. Nach diesem bekannten Verfahren ist vorgesehen, dass zu Beginn eines Anfahrvorgangs maximal zulässige Werte der Rutschzeit und/oder der Reibarbeit der Anfahrkupplung während des Anfahrvorgangs sowie das zum Anfahren verfügbare Drehmoment des Antriebsmotors ermittelt werden. Anschließend werden in einer Berechnungsschleife beginnend mit dem höchsten Anfahrgang die Werte der jeweils mit diesem Anfahrgang zu erwartenden Rutschzeit und/oder Reibarbeit der Anfahrkupplung vorausberechnet, diese Werte mit den maximal zulässigen Werten verglichen, und dies solange mit dem jeweils niedrigeren Anfahrgang durchgeführt, bis die vorausberechneten Werte kleiner oder gleich den maximal zulässigen Werten sind. Der höchste Anfahrgang, dessen vorausberechnete Werte die maximal zulässigen Werte nicht überschreiten, ist somit der gesuchte optimale Anfahrgang. Da die Ermittlung der maximal zulässigen Rutschzeit und/oder Reibarbeit der Anfahrkupplung sehr komplex und mit vertretbarem Aufwand nicht kurzzeitig berechenbar ist, ist zumindest hierfür ein in einem Datenspeicher des Getriebesteuergerätes abgelegtes fahrzeugspezifisches Kennfeld vorgesehen.

Den bekannten Steuerungsverfahren ist somit gemeinsam, dass für die Ermittlung des optimalen Anfahrgangs jeweils fahrzeugspezifische Kennfelder erforderlich sind. Diese Kennfelder müssen im Rahmen der Fahrzeugentwicklung für jede Kombination aus Kraftfahrzeug, Antriebsmotor, Stufenschaltgetriebe und Antriebsachse individuell ermittelt oder angepasst werden, welches einen hohen, durch qualifiziertes Fachpersonal zu erbringenden Arbeitsaufwand erfordert. Zudem besteht bei diesen Verfahren die Gefahr, dass in dem Datenspeicher des Getriebesteuergerätes eines in unterschiedlichen Fahrzeugapplikationen verwendeten und/oder in verschiedenen Ausführungen verfügbaren Stufenschaltgetriebes versehentlich die Kennfelder für eine andere Fahrzeugkonfiguration oder für eine andere Getriebevariante abgespeichert werden.

Vor diesem Hintergrund liegt der vorliegenden Erfindung die Aufgabe zugrunde, ein Verfahren zur Steuerung eines automatisierten Stufenschaltgetriebes der eingangs genannten Art anzugeben, mit dem die Ermittlung des jeweils optimalen Anfahrgangs auf einfache und zuverlässige Weise möglich ist, ohne dabei auf applikationsaufwendige fahrzeugspezifische Kennfelder zurückgreifen zu müssen.

Die Lösung dieser Aufgabe ergibt sich aus den Merkmalen des Hauptanspruchs. Demnach geht die Erfindung aus von einem Verfahren zur Steuerung eines automatisierten Stufenschaltgetriebes eines Kraftfahrzeugs, das eingangsseitig über mindestens eine steuerbare Reibungskupplung mit einem als Verbrennungsmotor ausgebildeten Antriebsmotor und ausgangsseitig über einen Achsantrieb mit antreibbaren Rädern einer Antriebsachse in Verbindung steht, und das mehrere Anfahrgänge aufweist, wobei zu Beginn eines Anfahrvorgangs einer der Anfahrgänge in Abhängigkeit von der Fahrzeugmasse $m_{Fzg}$ und der Fahrbahnsteigung $\alpha_{Fb}$ als optimaler Anfahrgang $G_{Anf\_opt}$ ausgewählt sowie nachfolgend eingelegt wird.

Außerdem ist bei dem Verfahren gemäß der Erfindung vorgesehen, dass unter Vorgabe einer minimalen Anfahrbeschleunigung $a_{Anf\_min}$ und eines über die Schlupfphase von der Reibungskupplung in zeitlichen Mittel übertragenen statischen Motormomentes $M_{Mot\_st}$ eine zum Anfahren erforderliche Mindestübersetzung $i_{Anf\_min}$ nach der Formel

$$i_{Anf\_min} = \left( \frac{1}{2} * \frac{M_{Mot\_st} * \eta_{ges}}{J_{Antr} * a_{Anf\_min}} - \sqrt{\frac{1}{4}\left( \frac{M_{Mot\_st} * \eta_{ges}}{J_{Antr} * a_{Anf\_min}} \right)^2 - \frac{m_{Fzg} * a_{Anf\_min} + F_w}{J_{Antr} * a_{Anf\_min}}} \right) * \frac{r_{dyn}}{i_{Ha}}$$

berechnet wird, wobei mit $\eta_{ges}$ der Gesamtwirkungsgrad des Antriebsstrangs, mit $J_{Antr}$ das Massenträgheitsmoment der rotierenden Bauteile des Antriebsstrangs, mit $F_w$ der Fahrwiderstand des Kraftfahrzeugs, mit $r_{dyn}$ der dynamische Reifenhalbmesser der Räder der Antriebsachse und mit $i_{Ha}$ die Übersetzung des Achsgetriebes der Antriebsachse bezeichnet sind, und dass der optimale Anfahrgang $G_{Anf\_opt}$ in Abhängigkeit von der berechneten Mindestübersetzung $i_{Anf\_min}$ ausgewählt wird.

Vorteilhafte und zweckmäßige Ausgestaltungen sowie Weiterbildungen des erfindungsgemäßen Verfahrens sind Gegenstand der Unteransprüche.

Im Gegensatz zu den bekannten Verfahren zur Ermittlung eines Anfahrgangs, die auf fahrzeugspezifische Kennfelder zurückgreifen, wird nach dem erfindungsgemäßen Verfahren unter Verwendung bekannter oder zweckmäßig vorgegebener Parameter die zum Anfahren unter den aktuellen Anfahrbedingungen, insbesondere der aktuellen Fahrzeugmasse $m_{Fzg}$ und der aktuellen Fahrbahnsteigung $\alpha_{Fb}$, erforderliche minimale Anfahrübersetzung $i_{Anf\_min}$ unmittelbar berechnet und damit aus den verfügbaren Anfahrgängen $G_{Anf}$ der jeweils optimale Anfahrgang $G_{Anf\_opt}$ ausgewählt.

Die möglichst genaue Ermittlung der Fahrzeugmasse $m_{Fzg}$ und der Fahrbahnsteigung $\alpha_{Fb}$ ist für die Anwendung des erfindungsgemäßen Verfahrens zwar durchaus erforderlich, jedoch nicht unmittelbar Gegenstand des vorliegenden Verfahrens. Vielmehr wird von einer hinreichend genauen Ermittlung dieser Parameter im Vorlauf oder zu Beginn der Anwendung des erfindungsgemäßen Verfahrens ausgegangen. Entsprechende Verfahren zur Ermittlung der Fahrzeugmasse $m_{Fzg}$ sind beispielsweise aus der EP 0 666 435 B1, der DE 198 37 380 A1 und der DE 10 2004 015 966 A1 bekannt. Die Fahrbahnsteigung $\alpha_{Fb}$ kann auf ähnliche Weise zum Ende des letzten Fahrzyklus aus dem Fahrwiderstand $F_w$ und dem Motormoment $M_{Mot}$ berechnet oder aktuell mittels eines in dem Kraftfahrzeug eingebauten Neigungssensors oder mittels eines Navigationssystems aus einer die Fahrbahnsteigung $\alpha_{Fb}$ enthaltenden Straßendatenbank ermittelt werden.

Die angegebene Formel zur Berechnung der minimalen Anfahrbeschleunigung $a_{Anf\_min}$ ist aus der an sich bekannten Fahrwiderstandsgleichung

$$F_{Zug} = F_W + F_{Träg} + F_{Teta}$$

ableitbar, wobei mit $F_{Zug}$ die von dem Antriebsmotor auf die antreibbaren Räder der Antriebsachse übertragene Zugkraft, mit $F_{Träg}$ der translatorische Trägheitswiderstand der Fahrzeugmasse $m_{Fzg}$, und mit $F_{Teta}$ der rotatorische Trägheitswiderstand durch das Massenträgheitsmoment $J_{Antr}$ der rotierenden Bauteile des Antriebsstrangs bezeichnet ist. Mit den an sich bekannten Beziehungen für

$$F_{Zug} = M_{Mot\_st} * \frac{i_{Ha}}{r_{dyn}} * i_G * \eta_{ges} \; ,$$

$$F_{Träg} = m_{Fzg} * a_{Fzg} \; ,$$

und

$$F_{Teta} = J_{Antr} * a_{Fzg} * \left( \frac{i_{Ha}}{r_{dyn}} * i_G \right)^2 \; ,$$

bei denen allgemein mit $i_G$ die Übersetzung des in dem Stufenschaltgetriebe eingelegten Gangs und mit $a_{Fzg}$ die Fahrzeugbeschleunigung bezeichnet sind, ergibt sich durch Einsetzen und Umstellen die quadratische Gleichung

$$0 = A * i_G{}^2 + B * i_G + C \; ,$$

mit

$$A = J_{Antr} * a_{Fzg} * \left( \frac{i_{Ha}}{r_{dyn}} \right)^2 \; ,$$

$$B = - M_{Mot\_st} * \frac{i_{Ha}}{r_{dyn}} * \eta_{ges} \; ,$$

und

$$C = m_{Fzg} * a_{Fzg} + F_W \cdot$$

Die Lösung dieser Gleichung ergibt sich in an sich bekannter Weise zu

$$i_G = -\frac{1}{2} * \frac{B}{A} \, {\scriptstyle(+)}\!\!\Big/\!\!{\scriptstyle-} \sqrt{\frac{1}{4}\left(\frac{B}{A}\right)^2 - \frac{C}{A}} \; ,$$

wobei aus Plausibilitätsgründen nur die kleinere Lösung ein realistisches Ergebnis liefert. Mit dem Einsetzen der vorzugebenden minimalen Anfahrbeschleunigung $a_{Anf\_min}$ anstelle der Fahrzeugbeschleunigung $a_{Fzg}$ ist diese Formel identisch mit der oben angegebenen Lösungsformel und liefert die zum Anfahren erforderliche Mindestübersetzung $i_{Anf\_min}$, die erfindungsgemäß zur Bestimmung des optimalen Anfahrgangs $G_{Anf\_opt}$ genutzt wird.

Da der Luftwiderstand $F_{Luft}$ aufgrund der geringen Fahrgeschwindigkeit $V_{Fzg}$ vernachlässigbar ist, wird der Fahrwiderstand $F_W$ aus der Summe des Rollwiderstands $F_{Roll}$ und des Steigungswiderstands $F_{Steig}$ gebildet und kann nach der Gleichung

$$F_W = m_{Fzg} * g * \left( f_{Roll} * \cos(\alpha_{Fb}) + \sin(\alpha_{Fb}) \right)$$

berechnet werden, wobei mit g die Erdbeschleunigung, mit $f_{Roll}$ die Rollwiderstandszahl und mit $\alpha_{Fb}$ der Steigungswinkel der Fahrbahn bezeichnet sind.

Die Bestimmung des optimalen Anfahrgangs $G_{Anf\_opt}$ kann derart erfolgen, dass derjenige Anfahrgang $G_{Anf}$ als optimaler Anfahrgang $G_{Anf\_opt}$ ausgewählt wird, dessen Übersetzung $i_{G-Anf}$ größer oder gleich der berechneten Mindestübersetzung $i_{Anf\_min}$ ist ($i_{G\_Anf} \geq i_{Anf\_min}$). Hierdurch wird zuverlässig vermieden, dass in einem zu hohen Anfahrgang $G_{Anf}$ mit einer zu kleinen Übersetzung angefahren wird.

Alternativ dazu kann die Bestimmung des optimalen Anfahrgangs $G_{Anf-opt}$ jedoch auch derart erfolgen, dass derjenige Anfahrgang $G_{Anf}$ als optimaler Anfahrgang $G_{Anf-opt}$ ausgewählt wird, dessen Übersetzung $i_{G-Anf}$ der berechneten Mindestübersetzung $i_{Anf-min}$ am nächsten liegt ($i_{G-Anf} \approx i_{Anf\_min}$). Hierdurch kann vermieden werden, dass ein benachbarter Anfahrgang $G_{Anf}$ mit einer gegenüber der berechneten Mindestübersetzung $i_{Anf-min}$ geringfügig kleineren Übersetzung $i_{G-Anf}$ ignoriert und stattdessen der nächstniedrigere Anfahrgang $G_{Anf}$ mit einer unnötig hohen Übersetzung $i_{G-Anf}$ zum Anfahren verwendet wird.

Im Hinblick auf eine möglichst betriebsgünstige Bestimmung des optimalen Anfahrgangs $G_{Anf-opt}$ ist es aber besonders vorteilhaft, wenn eine Toleranzgrenze $\delta$ oberhalb und unterhalb der berechneten Mindestübersetzung $i_{Anf\_min}$ vorgegeben wird, und im Fall mindestens eines mit seiner Übersetzung $i_{G-Anf}$ innerhalb der Toleranzgrenzen liegenden Anfahrgangs $G_{Anf}$ derjenige Anfahrgang $G_{Anf}$ als optimaler Anfahrgang $G_{Anf\_opt}$ ausgewählt wird, dessen Übersetzung $i_{G\_Anf}$ der berechneten Mindestübersetzung $i_{Anf\_min}$ am nächsten liegt ($i_{G\_Anf} \approx i_{Anf\_min}$), wogegen im Fall keines mit seiner Übersetzung $i_{G-Anf}$ innerhalb der Toleranzgrenzen $\delta$ liegenden Anfahrgangs $G_{Anf}$ der nächstgelegene niedrigere Anfahrgang $G_{Anf}$ als optimaler Anfahrgang $G_{Anf\_opt}$ ausgewählt wird, dessen Übersetzung $i_{G-Anf}$ größer als die berechnete Mindestübersetzung $i_{Anf\_min}$ ist ($i_{G-Anf} > i_{Anf\_min}$).

In der Praxis hat es sich als zweckmäßig erwiesen, die Toleranzgrenzen $\delta$ zur Auswahl des optimalen Anfahrgangs $G_{Anf-opt}$ mit $\pm$ 5% bezogen auf die berechnete Mindestübersetzung $i_{Anf-min}$ vorzugeben ($\delta = i_{Anf\_min} \pm 5\%$).

Bei Vorliegen einer Anfahrgangbeschränkung wird im Fall der Auswahl eines über dem höchstzulässigen Anfahrgang $G_{Anf-max}$ liegenden Gangs $G_i$ jedoch unter allen Umständen der höchstzulässige Anfahrgang $G_{Anf\_max}$ als optimaler Anfahrgang $G_{Anf\_opt}$ verwendet ($G_{Anf\_opt} = G_{Anf\_max}$).

Das vorzugebende statische Motormoment $M_{Mot-st}$ wird zweckmäßig durch die Multiplikation des Nennmomentes $M_{Mot\_Ref}$ des Antriebsmotors mit einem Anfahrfaktor $f_{Anf} < 1$ berechnet. Hierdurch wird berücksichtigt, dass nicht zwangsläufig mit dem maximalen Drehmoment des Antriebsmotors angefahren werden muss, und dass das im zeitlichen Mittel während der Schlupfphase über die Reibungskupplung übertragene Drehmoment unterhalb des Wertes zum Ende der Schlupfphase liegt.

Der Anfahrfaktor $f_{Anf}$ kann als eine von der Fahrzeugmasse $m_{Fzg}$ und der Fahrbahnsteigung $\alpha_{Fb}$ unabhängige Konstante vorgegeben werden, wobei sich ein Wert von $f_{Anf} = 0{,}5$ als zweckmäßig erwiesen hat.

Es ist jedoch auch möglich, den Anfahrfaktor $f_{Anf}$ als eine von der Fahrzeugmasse $m_{Fzg}$ und/oder der Fahrbahnsteigung $\alpha_{Fb}$ abhängige Variable zu berechnen. Dies kann z.B. derart geschehen, dass der Anfahrfaktor $f_{Anf}$ ausgehend von einem für eine mittlere Fahrzeugmasse $m_{Fzg-m}$ und/oder eine mittlere Fahrbahnsteigung $\alpha_{Fb\_m}$ gültigen Standardwert $f_{Anf\_Std}$ mit abnehmender Fahrzeugmasse $m_{Fzg}$ reduziert und mit zunehmender Fahrzeugmasse $m_{Fzg}$ erhöht und/oder mit abnehmender Fahrbahnsteigung $\alpha_{Fb}$ reduziert und mit zunehmender Fahrbahnsteigung $\alpha_{Fb}$ erhöht wird. Hierdurch wird erreicht, dass bei niedriger Fahrzeugmasse $m_{Fzg}$, also bei geringer Zuladung, und/oder bei geringer Fahrbahnsteigung $\alpha_{Fb}$ ein Anfahrgang $G_{Anf}$ ausgewählt wird, der ein Anfahren mit geringerer Motorleistung ermöglicht, und dass bei hoher Fahrzeugmasse $m_{Fzg}$, also bei hoher Zuladung, und/oder bei großer Fahrbahnsteigung $\alpha_{Fb}$ ein

Anfahrgang $G_{Anf}$ ausgewählt wird, der ein Anfahren mit höherer Motorleistung ermöglicht.

Die minimale Anfahrbeschleunigung $a_{Anf\_min}$ kann ebenfalls als eine von der Fahrzeugmasse $m_{Fzg}$ und der Fahrbahnsteigung $\alpha_{Fb}$ unabhängige Konstante vorgegeben werden, wobei ein Wert von $a_{Anf\_min}$ = 0,2 m/s² als zweckmäßig angesehen wird.

Alternativ dazu ist es jedoch auch möglich, die minimale Anfahrbeschleunigung $a_{Anf\_min}$ als eine von der Fahrzeugmasse $m_{Fzg}$ und/oder der Fahrbahnsteigung $\alpha_{Fb}$ abhängige Variable zu berechnen. Dies kann z.B. derart erfolgen, dass die minimale Anfahrbeschleunigung $a_{Anf\_min}$ ausgehend von einem für eine mittlere Fahrzeugmasse $m_{Fzg-m}$ und/oder eine mittlere Fahrbahnsteigung $\alpha_{Fb\_m}$ gültigen Standardwert $a_{Anf\_Std}$ mit abnehmender Fahrzeugmasse $m_{Fzg}$ erhöht und mit zunehmender Fahrzeugmasse $m_{Fzg}$ reduziert und/oder mit abnehmender Fahrbahnsteigung $\alpha_{Fb}$ erhöht und mit zunehmender Fahrbahnsteigung $\alpha_{Fb}$ reduziert wird. Hierdurch wird erreicht, dass bei niedriger Fahrzeugmasse $m_{Fzg}$, also bei geringer Zuladung, und/oder bei geringer Fahrbahnsteigung $\alpha_{Fb}$ ein Anfahrgang $G_{Anf}$ ausgewählt wird, der ein Anfahren mit höherer Anfahrbeschleunigung $a_{Anf}$ ermöglicht, und dass bei hoher Fahrzeugmasse $m_{Fzg}$, also bei hoher Zuladung, und/oder bei großer Fahrbahnsteigung $\alpha_{Fb}$ ein Anfahrgang $G_{Anf}$ ausgewählt wird, der ein Anfahren mit niedrigerer Anfahrbeschleunigung $a_{Anf}$ ermöglicht.

Zur Verdeutlichung der Erfindung ist der Beschreibung eine Zeichnung beigefügt. In dieser zeigt

Fig. 1     ein Diagramm mit in Abhängigkeit mehrerer Fahrzeugmassen $m_{Fzg}$ für einen Bereich von Fahrbahnsteigungen $\alpha_{Fb}$ bzw. Stg berechneten Werten der minimalen Anfahrbeschleunigung, und

Fig. 2     ein Diagramm mit für eine Fahrzeugmasse $m_{Fzg}$ von 40 to (= 40000 kg) für einen Bereich von Fahrbahnsteigungen $\alpha_{Fb}$ bzw. Stg berechneten Werten der minimalen Anfahrbeschleunigung mit der Vorgabe eines Toleranzbereiches.

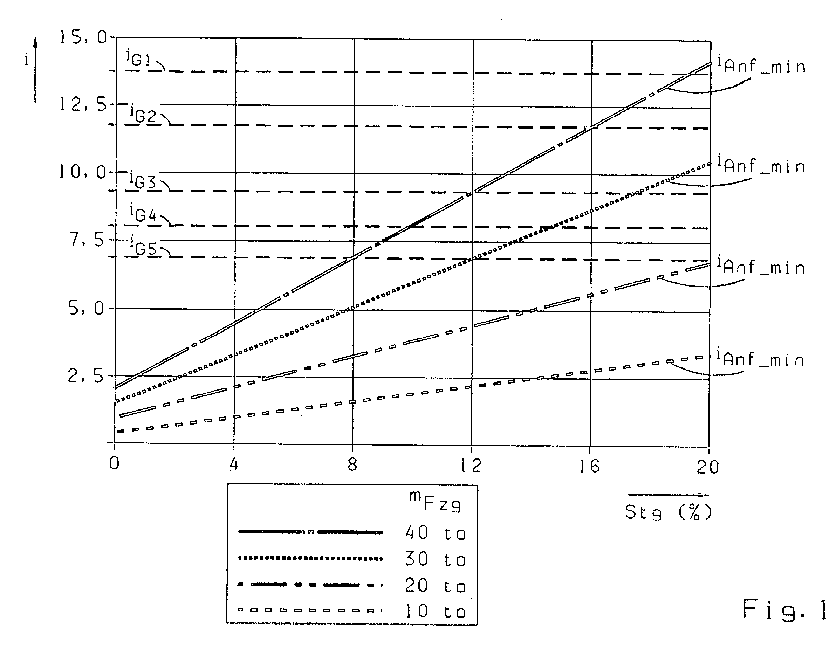

In dem Diagramm der Fig. 1 sind für die Fahrzeugmassen $m_{Fzg}$ von 10 to, 20 to, 30 to und 40 to jeweils die im Bereich der Fahrbahnsteigung Stg von 0% bis 20% (entspricht mit $\alpha_{Fb}$ = arctan(Stg/100) einem Steigungswinkel $\alpha_{Fb}$ von 0° bis 11,31 °) mit der Formel nach Anspruch 1 berechneten Werte der zum Anfahren erforderlichen Mindestübersetzung $i_{Anf\_min}$ dargestellt. Die Berechnungen wurden mit den folgenden Werten durchgeführt:

$M_{Mot\_Ref}$ = 2000 Nm
$f_{Anf}$ = 0,5
$i_{Ha}$ = 3,7
$r_{dyn}$ = 0,522 m
$\eta_{ges}$ = 0,98
$J_{Antr}$ = 3,8 kg m²
$f_{Roll}$ = 0,015
$a_{Anf\_min}$ = 0,2 m/s²
$G_{Anf\_max}$ = G5 (5. Gang)

Zusätzlich sind in dem Diagramm gemäß Fig. 1 beispielhaft mit $i_{G1}$ = 13,68 , $i_{G2}$ = 11,64 , $i_{G3}$ = 9,4 , $i_{G4}$ = 8,0 , und $i_{G5}$ = 6,73 die Übersetzungen der vorliegend als Anfahrgänge $G_{Anf}$ vorgesehenen Gänge G1 bis G5 mit horizontalen Strich-Punkt-Linien eingezeichnet.

Daraus ergibt sich beispielsweise, dass bei einer Fahrzeugmasse von $m_{Fzg}$ = 40 to und einer Fahrbahnsteigung von Stg = 10%, für die eine Mindestübersetzung von $i_{Anf\_min}$ = 7,96 berechnet wird, egal ob der hinsichtlich seiner Übersetzung $i_{G\_Anf}$ nächstgelegene oder niedrigere Anfahrgang $G_{Anf}$ als optimaler Anfahrgang $G_{Anf\_opt}$ ausgewählt wird, jeweils der vierte Gang G4 mit der Übersetzung $i_{G4}$ = 8,0 als Anfahrgang $G_{Anf\_opt}$ bestimmt wird ($G_{Anf\_opt}$ = G4).

Dagegen wird bei einer Fahrzeugmasse von $m_{Fzg}$ = 40 to und einer Fahrbahnsteigung von Stg = 14%, für die eine Mindestübersetzung von $i_{Anf\_min}$ = 10,42 berechnet wird, bei einer Auswahl des hinsichtlich seiner Übersetzung $i_{G-Anf}$ nächstgelegenen Anfahrgangs $G_{Anf}$ als optimaler Anfahrgang $G_{Anf\_opt}$ der dritte Gang G3 mit der Übersetzung $i_{G3}$ = 9,4 als Anfahrgang $G_{Anf\_opt}$ bestimmt ($G_{Anf\_opt}$ = G3), wogegen bei einer Auswahl des hinsichtlich seiner Übersetzung $i_{G\_Anf}$ niedrigeren Anfahrgangs $G_{Anf}$ der zweite Gang G2 mit der Übersetzung $i_{G2}$ = 11,64 als Anfahrgang $G_{Anf-opt}$ bestimmt wird ($G_{Anf\_opt}$ = G2).

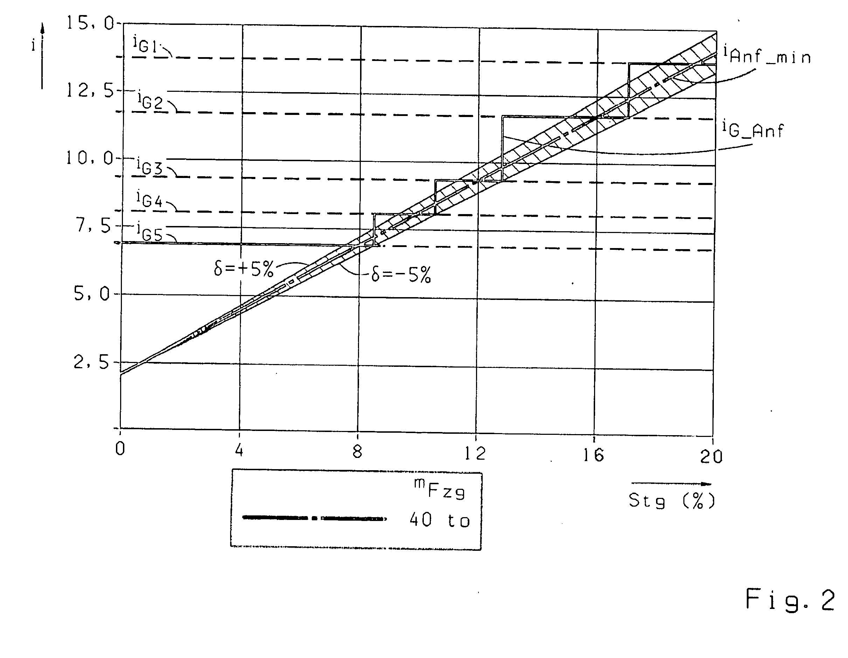

In einer vorteilhaften Weiterbildung des erfindungsgemäßen Verfahrens ist, wie dies in dem Diagramm der Fig. 2 für die Fahrzeugmasse von $m_{Fzg}$ = 40 to durch den schraffierten Toleranzbereich veranschaulicht ist, eine auf die berechnete Mindestübersetzung $i_{Anf-min}$ bezogene obere und untere Toleranzgrenze von vorliegend $\delta$ = ± 5% vorgegeben. Wenn in dem jeweiligen Betriebspunkt mindestens ein Anfahrgang G1 bis G5 mit seiner Übersetzung $i_{G1}$ bis $i_{G5}$ innerhalb der Toleranzgrenzen $\delta$ liegt, so wird derjenige Anfahrgang G1 bis G5 als optimaler Anfahrgang $G_{Anf\_opt}$, ausgewählt, dessen Übersetzung $i_{G1}$, bis $i_{G5}$ der berechneten Mindestübersetzung $i_{Anf\_min}$ am nächsten liegt.

Liegt dagegen kein Anfahrgang G1 bis G5 mit seiner Übersetzung $i_{G1}$, bis $i_{G5}$ innerhalb der Toleranzgrenzen

$\delta$, so wird der nächstgelegene niedrigere Anfahrgang G1 bis G5 als optimaler Anfahrgang $G_{Anf\_opt}$ ausgewählt, dessen Übersetzung $i_{G1}$ bis $i_{G5}$ größer als die berechnete Mindestübersetzung $i_{Anf\_min}$ ist.

Die daraus resultierende stufenförmige Entscheidungsgrenzlinie ist in Fig. 2 als verstärkte durchgezogene Linie eingezeichnet und mit $i_{G\_Anf}$ bezeichnet. Aus dieser Darstellung ist erkennbar, dass in dem vorliegenden Anwendungsbeispiel bis zu einer Fahrbahnsteigung von Stg = 8,6 % (ergibt eine berechnete Mindestübersetzung von $i_{Ant\_min}$ = 7,11) der fünfte Gang G5 als Anfahrgang ausgewählt wird, dass oberhalb dieses Steigungswertes bis zu einer Steigung von Stg = 10,77 % (entspricht einer berechneten Mindestübersetzung von $i_{anf\_min}$ = 8,43) der vierte Gang G4 als Anfahrgang ausgewählt wird, dass oberhalb dieses Steigungswertes bis zu einer Steigung von Stg = 13,23 % (ergibt $i_{Anf\_min}$ = 9,94) der dritte Gang G3 als Anfahrgang ausgewählt wird, dass oberhalb dieses Steigungswertes bis zu einer Steigung von Stg = 16,99 % (ergibt $i_{Anf\_min}$ = 12,27) der zweite Gang G2 als Anfahrgang ausgewählt wird, und dass oberhalb der Steigung von Stg = 16,99 % der erste Gang G1 als Anfahrgang verwendet wird.

Bezugszeichen

| | |
|---|---|
| $a_{Anf\_min}$ | Minimale Anfahrbeschleunigung |
| $a_{Anf\_Std}$ | Standardwert der Anfahrbeschleunigung |
| $a_{Fzg}$ | Fahrzeugbeschleunigung (allgemein) |
| $f_{Anf}$ | Anfahrfaktor |
| $f_{Anf\_Std}$ | Standardwert des Anfahrfaktors |
| $f_{Roll}$ | Rollwiderstandszahl |
| $F_{Luft}$ | Luftwiderstand |
| $F_{Roll}$ | Rollwiderstand |
| $F_{Steig}$ | Steigungswiderstand |
| $F_{Teta}$ | Trägheitswiderstand der rotierenden Massen |
| $F_{Träg}$ | Trägheitswiderstand der Fahrzeugmasse |
| $F_w$ | Fahrwiderstand |
| $F_{Zug}$ | Zugkraft (an den Rädern der Antriebsachse) |
| $g$ | Erdbeschleunigung |
| $G_{Anf}$ | Anfahrgang (allgemein) |
| $G_{Anf\_max}$ | Höchstzulässiger Anfahrgang |
| $G_{Anf\_opt}$ | Optimaler Anfahrgang |
| $G_i$ | Gang (allgemein) |
| G1 | Erster Gang |
| G2 | Zweiter Gang |
| G3 | Dritter Gang |
| G4 | Vierter Gang |
| G5 | Fünfter Gang |
| $i_{Anf\_min}$ | Mindestübersetzung (des Stufenschaltgetriebes) |
| $i_G$ | Übersetzung des eingelegten Gangs (allgemein) |
| $i_{G\_Anf}$ | Übersetzung des Anfahrgangs (allgemein) |
| $i_{Ha}$ | Übersetzung der Antriebsachse (Hinterachse) |
| $i_{G1}$ | Übersetzung von G1 |
| $i_{G2}$ | Übersetzung von G2 |
| $i_{G3}$ | Übersetzung von G3 |
| $i_{G4}$ | Übersetzung von G4 |
| $i_{G5}$ | Übersetzung von G5 |
| $J_{Antr}$ | Massenträgheitsmoment des Antriebsstrangs |
| $m_{Fzg}$ | Fahrzeugmasse |
| $m_{Fzg\_m}$ | Mittlere Fahrzeugmasse |
| $M_{Mot\_Ref}$ | Nennmoment des Antriebsmotors |
| $M_{Mot\_st}$ | Statisches Drehmoment des Antriebsmotors |
| $r_{dyn}$ | Dynamischer Reifenradius (der Räder der Antriebsachse) |
| Stg | Fahrbahnsteigung (in %) |
| $\alpha_{Fb}$ | Fahrbahnsteigung (in °) |
| $\alpha_{Fb\_m}$ | Mittlere Fahrbahnsteigung (in °) |
| $\delta$ | Toleranzgrenze |

$\eta_{ges}$     Gesamtwirkungsgrad des Antriebsstrangs

**Patentansprüche**

1.  Verfahren zur Steuerung eines automatisierten Stufenschaltgetriebes eines Kraftfahrzeugs, das eingangsseitig über mindestens eine steuerbare Reibungskupplung mit einem als Verbrennungsmotor ausgebildeten Antriebsmotor und ausgangsseitig über einen Achsantrieb mit antreibbaren Rädern einer Antriebsachse in Verbindung steht, und das mehrere Anfahrgänge ($G_{Anf}$, G1 - G5) aufweist, wobei zu Beginn eines Anfahrvorgangs einer der Anfahrgänge ($G_{Anf}$, G1 - G5) in Abhängigkeit von der Fahrzeugmasse ($M_{Fzg}$) und der Fahrbahnsteigung ($\alpha_{Fb}$) als optimaler Anfahrgang ($G_{Anf\_opt}$) ausgewählt sowie nachfolgend eingelegt wird, **dadurch gekennzeichnet, dass** unter Vorgabe einer minimalen Anfahrbeschleunigung ($a_{Anf\_min}$) und eines über die Schlupfphase von der Reibungskupplung im zeitlichen Mittel übertragenen statischen Motormomentes ($M_{Mot\_st}$) eine zum Anfahren erforderliche Mindestübersetzung ($i_{Anf\_min}$) nach der Formel

$$i_{Anf\_min} = \left( \frac{1}{2} * \frac{M_{Mot\_st} * \eta_{ges}}{J_{Antr} * a_{Anf\_min}} - \sqrt{\frac{1}{4}\left( \frac{M_{Mot\_st} * \eta_{ges}}{J_{Antr} * a_{Anf\_min}} \right)^2 - \frac{m_{Fzg} * a_{Anf\_min} + F_W}{J_{Antr} * a_{Anf\_min}}} \right) * \frac{r_{dyn}}{i_{Ha}}$$

berechnet wird, wobei mit $\eta_{ges}$ der Gesamtwirkungsgrad des Antriebsstrangs, mit $J_{Antr}$ das Massenträgheitsmoment der rotierenden Bauteile des Antriebsstrangs, mit $F_w$ der Fahrwiderstand des Kraftfahrzeugs, mit $r_{dyn}$ der dynamische Reifenhalbmesser der Räder der Antriebsachse, und mit $i_{Ha}$ die Übersetzung des Achsgetriebes der Antriebsachse bezeichnet sind, und dass der optimale Anfahrgang ($G_{Anf\_opt}$) in Abhängigkeit von der berechneten Mindestübersetzung ($i_{Anf\_min}$) ausgewählt wird.

2.  Verfahren nach Anspruch 1, **dadurch gekennzeichnet, dass** derjenige Anfahrgang ($G_{Anf}$, G1 - G5) als optimaler Anfahrgang ($G_{Anf\_opt}$) ausgewählt wird, dessen Übersetzung ($i_{G-Anf}$, $i_{G1}$ - $i_{G5}$) größer oder gleich der berechneten Mindestübersetzung ($i_{Anf\_min}$) ist ($i_{G\_Anf} \geq i_{Anf\_min}$).

3.  Verfahren nach Anspruch 1, **dadurch gekennzeichnet, dass** derjenige Anfahrgang ($G_{Anf}$, G1 - G5) als optimaler Anfahrgang ($G_{Anf\_opt}$) ausgewählt wird, dessen Übersetzung ($i_{G\_Anf}$, $i_{G1}$ - $i_{G5}$) der berechneten Mindestübersetzung ($i_{Anf\_min}$) am nächsten liegt ($i_{G\_Anf} \approx i_{Anf\_min}$).

4.  Verfahren nach zumindest einem der Ansprüche 1 bis 3, **dadurch gekennzeichnet, dass** eine Toleranzgrenze ($\delta$) oberhalb und unterhalb der berechneten Mindestübersetzung ($i_{Anf\_min}$) vorgegeben wird, und dass im Fall mindestens eines mit seiner Übersetzung ($i_{G\_Anf}$, $i_{G1}$ - $i_{G5}$) innerhalb der Toleranzgrenzen liegenden Anfahrgangs ($G_{Anf}$, G1 - G5) derjenige Anfahrgang ($G_{Anf}$, G1 - G5) als optimaler Anfahrgang ($G_{Anf\_opt}$) ausgewählt wird, dessen Übersetzung ($i_{G\_Anf}$, $i_{G1}$ - $i_{G5}$) der berechneten Mindestübersetzung ($i_{Anf\_min}$) am nächsten liegt ($i_{G-Anf} \approx i_{Anf\_min}$), wogegen im Fall keines mit seiner Übersetzung ($i_{G\_Anf}$, $i_{G1}$ - $i_{G5}$) innerhalb der Toleranzgrenzen ($\delta$) liegenden Anfahrgangs ($G_{Anf}$, G1 - G5) der nächstgelegene niedrigere Anfahrgang ($G_{Anf}$, G1 - G5) als optimaler Anfahrgang ($G_{Anf\_opt}$) ausgewählt wird, dessen Übersetzung ($i_{G\_Anf}$, $i_{G1}$-$i_{G5}$) größer als die berechnete Mindestübersetzung ($i_{Anf\_min}$) ist ($i_{G\_Anf} > i_{Anf\_min}$).

5.  Verfahren nach Anspruch 4, **dadurch gekennzeichnet, dass** die Toleranzgrenzen ($\delta$) zur Auswahl des optimalen Anfahrgangs ($G_{Anf\_opt}$) mit $\pm$ 5% bezogen auf die berechnete Mindestübersetzung ($i_{Anf\_min}$) vorgegeben werden ($\delta = i_{Anf\_min} \pm 5\%$).

6.  Verfahren nach zumindest einem der Ansprüche 1 bis 5, **dadurch gekennzeichnet, dass** bei Vorliegen einer Anfahrgangbeschränkung im Fall der Auswahl eines über dem höchstzulässigen Anfahrgang ($G_{Anf\_max}$) liegenden Gangs ($G_i$) der höchstzulässige Anfahrgang ($G_{Anf-max}$) als optimaler Anfahrgang ($G_{Anf\_opt}$) verwendet wird ($G_{Anf\_opt}$ = $G_{Anf\_max}$).

7.  Verfahren nach zumindest einem der Ansprüche 1 bis 6, **dadurch gekennzeichnet, dass** das statische Motormoment ($M_{Mot\_st}$) durch die Multiplikation des Nennmomentes ($M_{Mot\_Ref}$) des Antriebsmotors mit einem Anfahrfaktor ($f_{Anf} < 1$) berechnet wird.

8. Verfahren nach Anspruch 7, **dadurch gekennzeichnet, dass** der Anfahrfaktor ($f_{Anf}$) als eine von der Fahrzeugmasse ($m_{Fzg}$) und der Fahrbahnsteigung ($\alpha_{Fb}$) unabhängige Konstante vorgegeben wird.

9. Verfahren nach Anspruch 8, **dadurch gekennzeichnet, dass** der Anfahrfaktor ($f_{Anf}$) mit einem Wert von 0,5 vorgegeben wird ($f_{Anf} = 0{,}5$).

10. Verfahren nach Anspruch 7, **dadurch gekennzeichnet, dass** der Anfahrfaktor ($f_{Anf}$) als eine von der Fahrzeugmasse ($m_{Fz}g$) und/oder der Fahrbahnsteigung ($\alpha_{Fb}$) abhängige Variable berechnet wird.

11. Verfahren nach Anspruch 10, **dadurch gekennzeichnet, dass** der Anfahrfaktor ($f_{Anf}$) ausgehend von einem für eine mittlere Fahrzeugmasse ($m_{Fzg\_m}$) und/oder eine mittlere Fahrbahnsteigung ($\alpha_{Fb\_m}$) gültigen Standardwert ($f_{Anf\_Std}$) mit abnehmender Fahrzeugmasse ($m_{Fz}g$) reduziert und mit zunehmender Fahrzeugmasse ($m_{Fzg}$) erhöht und/oder mit abnehmender Fahrbahnsteigung ($\alpha_{Fb}$) reduziert und mit zunehmender Fahrbahnsteigung ($\alpha_{Fb}$) erhöht wird.

12. Verfahren nach zumindest einem der Ansprüche 1 bis 11, **dadurch gekennzeichnet, dass** die minimale Anfahrbeschleunigung ($a_{Anf\_min}$) als eine von der Fahrzeugmasse ($m_{Fzg}$) und der Fahrbahnsteigung ($\alpha_{Fb}$) unabhängige Konstante vorgegeben wird.

13. Verfahren nach Anspruch 12, **dadurch gekennzeichnet, dass** die minimale Anfahrbeschleunigung ($a_{Anf\_min}$) mit einem Wert von 0,2 m/s$^2$ vorgegeben wird ($a_{Anf\_min} = 0{,}2$ m/s$^2$).

14. Verfahren nach zumindest einem der Ansprüche 1 bis 11, **dadurch gekennzeichnet, dass** die minimale Anfahrbeschleunigung ($a_{Anf\_min}$) als eine von der Fahrzeugmasse ($m_{Fzg}$) und/oder der Fahrbahnsteigung ($\alpha_{Fb}$) abhängige Variable berechnet wird.

15. Verfahren nach Anspruch 14, **dadurch gekennzeichnet, dass** die minimale Anfahrbeschleunigung ($a_{Anf\_min}$) ausgehend von einem für eine mittlere Fahrzeugmasse ($m_{Fzg\_m}$) und/oder eine mittlere Fahrbahnsteigung ($\alpha_{Fb\_m}$) gültigen Standardwert ($a_{Anf\_Std}$) mit abnehmender Fahrzeugmasse ($m_{Fzg}$) erhöht und mit zunehmender Fahrzeugmasse ($m_{Fz}g$) reduziert und/oder mit abnehmender Fahrbahnsteigung ($\alpha_{Fb}$) erhöht und mit zunehmender Fahrbahnsteigung ($\alpha_{Fb}$) reduziert wird.

## Claims

1. Method for controlling an automatic multi-step reduction gear of a motor vehicle, which reduction gear is connected on the input side via at least one controllable friction clutch to a drive engine which is embodied as an internal combustion engine, and on the output side via an axle drive to drivable wheels of a drive axle, and which has a plurality of starting gearspeeds ($G_{start}$, G1-G5), wherein at the beginning of a starting process one of the starting gearspeeds ($G_{start}$, G1-G5) is selected as a function of the vehicle mass ($m_{veh}$) and the inclination of the carriageway ($\alpha_{carr}$) as an optimum starting gearspeed ($G_{start\_opt}$) and is subsequently engaged, **characterized in that** a minimum transmission ratio ($I_{start\_min}$) which is necessary for starting is calculated according to the formula:

$$i_{start\_min} = \left[ \frac{1}{2} \cdot \frac{M_{eng\_st} * \eta_{tot}}{J_{drive} * a_{start\_min}} - \sqrt{\frac{1}{4}\left( \frac{M_{eng\_st} * \eta_{tot}}{J_{drive} * a_{start\_min}} \right)^2 - \frac{m_{Fzg} * a_{start\_min} + F_w}{J_{drive} * a_{start\_min}}} \right] \cdot \frac{r_{dyn}}{i_{Ha}}$$

with the predefinition of a minimum starting acceleration ($\alpha_{start\_min}$) and of a static engine torque ($M_{eng\_st}$) which is transmitted averaged over time over the slip phase of the friction clutch, wherein $\eta_{tot}$ denotes the total efficiency of the drive train, $J_{drive}$ denotes the moment of mass inertia of the rotating components of the drive train, $F_w$ denotes the tractive resistance of the motor vehicle, $r_{dyn}$ denotes the dynamic tyre diameter of the wheels of the drive axle and $i_{Ha}$ denotes the transmission ratio of the axle gear of the drive axle, and **in that** the optimum starting gearspeed ($G_{start\_opt}$) is selected as a function of the calculated minimum transmission ratio ($i_{start\_min}$)

2. The method as claimed in Claim 1, **characterized in that** that starting gearspeed ($G_{start}$, G1-G5) whose transmission ratio ($i_{G\_start}$, $i_{G1}$-$i_{G5}$) is higher than or equal to the calculated minimum transmission ratio ($i_{start\_min}$) ($i_{G\_start} \geq i_{start\_min}$)

is selected as the optimum starting gearspeed ($G_{start\_opt}$).

3. The method as claimed in Claim 1, **characterized in that** that starting gearspeed ($G_{start}$, G1-G5) whose transmission ratio ($i_{G\_start}$, $i_{G1}$-$i_{G5}$) is closest to the calculated minimum transmission ratio ($i_{start\_min}$) ($i_{G\_start} \approx i_{start\_min}$) is selected as the optimum starting gearspeed ($G_{start\_opt}$).

4. The method as claimed in at least one of Claims 1 to 3, **characterized in that** a tolerance limit ($\delta$) is predefined above and below the calculated minimum transmission ratio ($i_{start\_min}$), and **in that** in the event of at least one starting gearspeed ($G_{start}$, G1-G5) having a transmission ratio ($i_{G\_start}$, $i_{G1}$-$i_{G5}$) within the tolerance limits, that starting gearspeed ($G_{start}$, G1-G5) whose transmission ratio ($i_{G\_start}$, $i_{G1}$-$i_{G5}$) is closest to the calculated minimum transmission ratio ($i_{start\_min}$) ($i_{G\_start} \approx istart\ min$) is selected as the optimum starting gearspeed ($G_{start\_opt}$), wherein in the event of no starting gearspeed ($G_{start}$, G1-G5) having a transmission ratio ($i_{G\_start}$, $i_{G1}$-$i_{G5}$) within the tolerance limits ($\delta$), the next lowest starting gearspeed ($G_{start}$, G1-G5) whose transmission ratio ($i_{G\_start}$, $i_{G1}$-$i_{G5}$) is higher than the calculated minimum transmission ratio ($i_{start\_min}$) ($i_{G\_start} > i_{start\_min}$) is selected as the optimum starting gearspeed ($G_{start\_opt}$).

5. Method according to Claim 4, **characterized in that** the tolerance limits ($\delta$) for selecting the optimum starting gearspeed ($G_{start\_opt}$) are predefined with $\pm5\%$ with respect to the calculated minimum transmission ratio ($i_{start\_min}$) ($\delta = i_{start\_min} \pm 5\%$).

6. Method according to at least one of Claims 1 to 5, **characterized in that**, when a starting gearspeed restriction is present, the highest permissible starting gearspeed ($G_{start\_max}$) is used as the optimum starting gearspeed ($G_{start\_opt}$) ($G_{start\_opt} = G_{start\_max}$) in the case of the selection of a gearspeed ($G_i$) which is above the highest permissible starting gearspeed ($G_{start\_max}$).

7. Method according to at least one of Claims 1 to 6, **characterized in that** the static engine torque ($M_{eng\_st}$) is calculated by the multiplication of the rated torque ($M_{eng\_Ref}$) of the drive engine by a starting factor ($f_{start} < 1$).

8. Method according to Claim 7, **characterized in that** the starting factor ($f_{start}$) is predefined as a constant which is independent of the vehicle mass ($m_{veh}$) and the positive gradient of the carriageway ($\alpha_{carr}$).

9. Method according to Claim 8, **characterized in that** the starting factor ($f_{start}$) is predefined with a value of 0.5 ($f_{start} = _{0.5}$).

10. Method according to Claim 7, **characterized in that** the starting factor ($f_{start}$) is calculated as a variable which is dependent on the vehicle mass ($m_{veh}$) and/or the positive gradient of the carriageway ($\alpha_{Carr}$).

11. Method according to Claim 10, **characterized in that** the starting factor ($f_{start}$) is reduced, starting from a standard value ($f_{start\_Std}$) valid for a mean vehicle mass ($m_{veh\_m}$) and/or a mean positive gradient of the carriageway ($\alpha_{carr\_m}$), as the vehicle mass ($m_{veh}$) decreases, and is increased as the vehicle mass ($m_{veh}$) increases, and/or is reduced as the positive gradient of the carriageway ($\alpha_{carr}$) decreases and is increased as the positive gradient of the carriageway ($\alpha_{carr}$) increases.

12. Method according to at least one of Claims 1 to 11, **characterized in that** the minimum starting acceleration ($a_{start\_min}$) is predefined as a constant which is independent of the vehicle mass ($m_{veh}$) and the positive gradient of the carriageway ($\alpha_{carr}$).

13. Method according to Claim 12, **characterized in that** the minimum starting acceleration ($a_{start\_min}$) is predefined with a value of 0.2 m/s$^2$ ($a_{start\_min}$ = 0.2 m/s$^2$).

14. Method according to at least one of Claims 1 to 11, **characterized in that** the minimum starting acceleration ($a_{start\_min}$) is calculated as a variable which is dependent on the vehicle mass ($m_{veh}$) and/or the positive gradient of the carriageway ($\alpha_{carr}$).

15. Method according to Claim 14, **characterized in that** the minimum starting acceleration ($a_{start\_min}$) is increased, starting from a standard value ($a_{start\_std}$) valid for a mean vehicle mass ($m_{veh\_m}$) and/or a mean positive gradient of the carriageway ($\alpha_{carr\_m}$), as the vehicle mass ($m_{veh}$) decreases, and is reduced as the vehicle mass ($m_{veh}$) increases, and/or is increased as the positive gradient of the carriageway ($\alpha_{carr}$) decreases and is reduced as the positive gradient of the carriageway ($\alpha_{carr}$) increases.

**Revendications**

1. Procédé pour commander une boîte de vitesses automatisée à rapports étagés d'un véhicule automobile, qui est en liaison, du côté de l'entrée, par le biais d'au moins un embrayage à friction commandable, avec un moteur d'entraînement réalisé sous forme de moteur à combustion interne et du côté de la sortie, par le biais d'une commande d'essieu, avec des roues motrices d'un essieu moteur, et qui présente plusieurs rapports de démarrage ($G_{Anf}$, G1 - G5), l'un des rapports de démarrage ($G_{Anf}$, G1 - G5) étant sélectionné et ensuite enclenché en tant que rapport de démarrage optimal ($G_{Anf\_opt}$), au début d'une opération de démarrage, en fonction de la masse du véhicule ($m_{Fz}g$) et de l'inclinaison de la chaussée ($\alpha_{Fb}$), **caractérisé en ce qu'**en prédéfinissant une accélération de démarrage minimale ($a_{Anf\_min}$) et un couple moteur ($M_{Mot\_st}$) statique transmis en moyenne temporelle sur la phase de glissement par l'embrayage à friction, un rapport de transmission minimal requis pour le démarrage ($i_{Anf\_min}$) est calculé en fonction de la formule

$$i_{Anf\_min} = \left( \frac{1}{2} * \frac{M_{Mot\_st} * \eta_{ges}}{J_{Antr} * a_{Anf\_min}} - \sqrt{\frac{1}{4}\left(\frac{M_{Mot\_st} * \eta_{ges}}{J_{Antr} * a_{Anf\_min}}\right)^2 - \frac{m_{Fz} * a_{Anf\_min} + F_W}{J_{Antr} * a_{Anf\_min}}} \right) * \frac{r_{dyn}}{i_{Ha}}$$

$\eta_{ges}$ étant le rendement total de la chaîne cinématique, $J_{Antr}$ étant le couple d'inertie de masse des composants rotatifs de la chaîne cinématique, $F_w$ étant la résistance à l'avancement du véhicule automobile, $r_{dyn}$ étant le rayon dynamique des pneus des roues de l'essieu moteur, et $i_{Ha}$ étant le rapport de transmission de l'engrenage différentiel de l'essieu moteur, et **en ce que** le rapport de démarrage optimal ($G_{Anf\_opt}$) est sélectionné en fonction du rapport de transmission minimal calculé ($i_{Anf\_min}$).

2. Procédé selon la revendication 1, **caractérisé en ce que** le rapport de démarrage ($G_{Anf}$, G1 - G5) qui est sélectionné comme rapport de démarrage optimal ($G_{Anf\_opt}$) est celui dont le rapport de transmission ($i_{G\_Anf}$, $i_{G1}$ - $i_{G5}$) est supérieur ou égal au rapport de transmission minimal calculé ($i_{Anf\_min}$), ($i_{G\_Anf} \geq i_{Anf\_min}$).

3. Procédé selon la revendication 1, **caractérisé en ce que** le rapport de démarrage ($G_{Anf}$, G1 - G5) qui est sélectionné comme rapport de démarrage optimal ($G_{Anf\_opt}$) est celui dont le rapport de transmission ($i_{G\_Anf}$, $i_{G1}$ - $i_{G5}$) est le plus proche du rapport de transmission minimal calculé ($i_{Anf\_min}$), ($i_{G\_Anf} \approx i_{Anf\_min}$).

4. Procédé selon au moins l'une quelconque des revendications 1 à 3, **caractérisé en ce qu'**une limite de tolérance ($\delta$) est prédéfinie au-dessus et en dessous du rapport de transmission minimal calculé ($i_{Anf\_min}$), et **en ce que** dans le cas d'au moins un rapport de démarrage ($G_{Anf}$, G1 - G5) se situant avec son rapport de transmission ($i_{G\_Anf}$, $i_{G1}$ - $i_{G5}$) à l'intérieur des limites de tolérance, le rapport de démarrage ($G_{Anf}$, G1 - G5) sélectionné comme rapport de démarrage optimal ($G_{Anf\_opt}$) est celui dont le rapport de transmission ($i_{G\_Anf}$, $i_{G1}$-$i_{G5}$) est le plus proche du rapport de transmission minimal calculé ($i_{Anf\_min}$), tandis que dans le cas où aucun rapport de démarrage ($G_{Anf}$, G1 - G5) ne se situe avec son rapport de transmission ($i_{G\_Anf}$, $i_{G1}$-$i_{G5}$) à l'intérieur des limites de tolérance ($\delta$), le rapport de démarrage inférieur suivant ($G_{Anf}$, G1 - G5) sélectionné comme rapport de démarrage optimal ($G_{Anf\_opt}$) est celui dont le rapport de transmission ($i_{G\_Anf}$, $i_{G1}$ - $i_{G5}$) est supérieur au rapport de transmission minimal calculé ($i_{Anf\_min}$), ($i_{G\_Anf} > i_{Anf\_min}$).

5. Procédé selon la revendication 4, **caractérisé en ce que** les limites de tolérance ($\delta$) pour le choix du rapport de démarrage optimal ($G_{Anf\_opt}$) sont prédéfinies avec $\pm$ 5 % par rapport au rapport de transmission minimal calculé ($i_{Anf\_min}$), ($\delta = i_{Anf\_min} \pm 5\ \%$).

6. Procédé selon au moins l'une quelconque des revendications 1 à 5, **caractérisé en ce qu'**en présence d'une limitation du rapport de démarrage dans le cas du choix d'un rapport ($G_i$) situé au-dessus du plus haut rapport de démarrage admissible ($G_{Anf\_max}$), on utilise comme rapport de démarrage optimal ($G_{Anf\_opt}$) le plus haut rapport de démarrage admissible ($G_{Anf\_max}$), ($G_{Anf\_opt} = G_{Anf\_max}$).

7. Procédé selon au moins l'une quelconque des revendications 1 à 6, **caractérisé en ce que** le couple moteur statique

($M_{Mot\_st}$) est calculé par la multiplication du couple nominal ($M_{Mot\_Ref}$) du moteur d'entraînement par un facteur de démarrage ($f_{Anf} < 1$).

8.  Procédé selon la revendication 7, **caractérisé en ce que** le facteur de démarrage ($f_{Anf}$) est prédéfini en tant que constante indépendante de la masse du véhicule ($m_{Fz}g$) et de l'inclinaison de la chaussée ($\delta_{Fb}$).

9.  Procédé selon la revendication 8, **caractérisé en ce que** le facteur de démarrage ($f_{Anf}$) est prédéfini par une valeur de 0,5 ($f_{Anf} = 0,5$).

10. Procédé selon la revendication 7, **caractérisé en ce que** le facteur de démarrage ($f_{Anf}$) est calculé en tant que variable dépendant de la masse du véhicule ($m_{Fz}g$) et/ou de l'inclinaison de la chaussée ($\alpha_{Fb}$).

11. Procédé selon la revendication 10, **caractérisé en ce que** le facteur de démarrage ($f_{Anf}$), partant d'une valeur standard ($f_{Anf\_Std}$) valable pour une masse moyenne du véhicule ($m_{Fzg\_m}$) et/ou une inclinaison moyenne de la chaussée ($\alpha_{Fb\_m}$), est réduit avec une masse du véhicule décroissante ($m_{Fz}g$) et augmenté avec une masse croissante du véhicule ($m_{Fz}g$) et/ou est réduit avec une inclinaison décroissante de la chaussée ($\alpha_{Fb}$) et augmenté avec une inclinaison croissante de la chaussée ($\alpha_{Fb}$).

12. Procédé selon au moins l'une quelconque des revendications 1 à 11, **caractérisé en ce que** l'accélération de démarrage minimale ($a_{Anf\_min}$) est prédéfinie comme une constante indépendante de la masse du véhicule ($m_{Fz}g$) et de l'inclinaison de la chaussée ($\alpha_{Fb}$).

13. Procédé selon la revendication 12, **caractérisé en ce que** l'accélération de démarrage minimale ($a_{Anf\_min}$) est prédéfinie par une valeur de 0,2 m/s$^2$ ($a_{Anf\_min} = 0,2$ m/s$^2$).

14. Procédé selon au moins l'une quelconque des revendications 1 à 11, **caractérisé en ce que** l'accélération de démarrage minimale ($a_{Anf\_min}$) est calculée en tant que variable dépendant de la masse du véhicule ($m_{Fz}g$) et/ou de l'inclinaison de la chaussée ($\alpha_{Fb}$).

15. Procédé selon la revendication 14, **caractérisé en ce que** l'accélération de démarrage minimale ($a_{Anf\_min}$), partant d'une valeur standard ($a_{Anf\_std}$) valable pour une masse moyenne du véhicule ($m_{Fzg\_m}$) et/ou une inclinaison moyenne de la chaussée ($\alpha_{Fb\_m}$), est augmentée avec une masse du véhicule décroissante ($m_{Fz}g$) et réduite avec une masse croissante du véhicule ($m_{Fz}g$) et/ou est augmentée avec une inclinaison décroissante de la chaussée ($\alpha_{Fb}$) et réduite avec une inclinaison croissante de la chaussée ($\alpha_{Fb}$).

Fig. 1

EP 2 165 095 B1

Fig. 2

EP 2 165 095 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5406862 A
- DE 19839837 A1
- EP 0666435 B1
- DE 19837380 A1
- DE 102004015966 A1